# EUROPEAN PATENT SPECIFICATION

(11) **EP 1 746 799 B1**
(45) Date of publication and mention of the grant of the patent: **12.10.2011**
(21) Application number: 06015175.0
(22) Date of filing: 20.07.2006
(51) Int. Cl.: H04L 29/06

(54) **Execution of industrial automation applications on communication infrastructure devices**
Durchführung der industriellen Automatisierungsanwendungen auf Kommunikationsinfrastrukturvorrichtungen
Exécution des applications industrielles d'automation sur des dispositifs d'infrastructure de communication

(30) Priority: 22.07.2005 US 187468
(43) Date of publication of application: 24.01.2007
(73) Proprietor: Rockwell Automation Technologies, Inc., Mayfield Heights, OH 44124 (US)
(72) Inventor: Pai, Ramdas M., Racine, WI 53402 (US); Scott, Steven J., Brookfield, WI 53045 (US); Brandt, David D., New Berlin, WI 53146 (US)
(74) Representative: Grünecker, Kinkeldey, Stockmair & Schwanhäusser Anwaltssozietät

(56) References cited:
- WO-A-01/50678
- US-A1- 2004 103 168

## Description

The subject invention relates to industrial control systems and, more particularly, to integration of industrial automation functionality into a network infrastructure device, such as a switch, a router, a gateway, and a proxy.

Due to advances in computing technology, businesses today are able to operate more efficiently when compared to substantially similar businesses only a few years ago. For example, internal networking enables employees of a company to communicate instantaneously by email, quickly transfer data files to disparate employees, manipulate data files, share data relevant to a project to reduce duplications in work product, *etc.*
Furthermore, advancements in technology have enabled factory applications to become partially or completely automated. For instance, operations that once required workers to put themselves proximate to heavy machinery and other various hazardous conditions can now be completed at a safe distance therefrom.

Further, imperfections associated with human action have been minimized through employment of highly precise machines. Many of these factory devices supply data related to manufacturing to databases that are accessible by system/process/project managers on a factory floor. For instance, sensors and associated software can detect a number of instances that a particular machine has completed an operation given a set amount of time. Further, data from sensors can be delivered to a processing unit relating to system alarms. Thus, a factory automation system can review collected data and automatically and/or semiautomatically schedule maintenance of a device, replacement of a device, and other various procedures that relate to automating a process.

In today's industrial environments, however, transfer of data between programmable logic controllers, sensors, and actuators is insufficient for complete automation. Rather, seamless communication between various levels of systems is desirable to enable automation from product ordering down to manufacturing. To effectuate such seamless communication, today's industrial environments employ various networking protocols, cables, and the like across disparate systems. For instance, programmable logic controllers are employed to control actuators based upon sensed inputs (from sensors), and communication is undertaken in a binary fashion between the programmable logic controller and the sensors/actuators by way of a first communication protocol. One or more automation servers (e.g., desktop computers above the factory floor) can be employed to provide the programmable logic controller with control logic, and can communicate such logic over a second communication protocol. The automation server in turn can receive enterprise information, such as ordering information, from an information server or other suitable information system. Communications between the information server and automation server are often undertaken over an internet protocol, such as Ethernet.

Thus, disparate hardware (e.g., cabling, plugs, ...) is often necessary to communicate over the different protocols. Furthermore, mapping between different applications being communicated over disparate protocols can be problematic, as well as maintaining security over the different protocols. Furthermore, various computing devices are often dedicated to mapping between applications, thereby increasing expense and complexity of industrial automation systems.

WO01/50678 discloses a programmable logic controller which comprises a router having a router backplane which is connected to the programmable logic controller. The router backplane is further connected to a plurality of network ports. The programmable logic controller or network port communicates the network message to the router, and the router communicates the network message only to the programmable logic controller or the network port for which the network message is intended. A device is described for communicating messages between a programmable logic controller (PLC), a plurality of network ports, and a router with a router backplane. The plurality of network ports and the PLC generally comprise a network. The PLC comprises three sections: a PLC communication section, a PLC section, and a PLC backplane driver. The PLC section processes input data about the system or process to be controlled and generates output data for controlling that system or process. The PLC backplane driver receives network messages from the router through the router backplane and forwards the input data from the network message to the PLC section. The PLC backplane driver also receives output data from the PLC section and forwards the output data in a network message to the router through the router backplane.

US2004/0103168 describes a manufacturing facility, including a plurality of programmable logic controllers that contain operating programs and process parameters. The programmable logic controllers are connected to a network, such that the operating programs and process parameters from the programmable logic controllers can be backed up to a remote data storage device. Communication between a first PLC and a process specific network can be regulated or controlled by a firewall resident in the first PLC that therefore functionally isolates the first PLC from the network.

It is the object of the present invention to provide an improved apparatus, system and method facilitating utilization of disparate industrial automation applications.

This object is solved by the subject matter of the independent claims.

Preferred embodiments are defined in the dependent claims.

The following presents a simplified summary of the claimed subject matter in order to provide a basic understanding of some aspects described herein. This summary is not an extensive overview, and is not intended to identify key/critical elements or to delineate the scope of the claimed subject matter. Its sole purpose is to present some concepts in a simplified form as a prelude to the more detailed description that is presented later.

The claimed subject matter relates to utilizing a communication infrastructure device within an industrial environment to execute industrial automation applications. For example, the communication infrastructure device can be a network switch, a router, a proxy, a gateway, a firewall, a virtual private network, or any suitable combination thereof. The integration of industrial automation application capabilities into a communication infrastructure device enables continuation of migration to an industrial automation system that communicates a vast majority of data over Ethernet. Further, security is centralized, as number of devices within an industrial automation environment can be vastly reduced.

In accordance with one aspect described in more detail herein, a communication infrastructure device can include an interface component that receives a data packet, and a processor that executes an industrial automation application based at least in part upon content of the data packet. For example, the data packet can be delivered from a factory floor device, such as a sensor, and received at the communication infrastructure device. The communication infrastructure device can recognize origin of the data packet, and thereafter perform functionality that is substantially similar to that of a programmable logic controller. In other words, the communication infrastructure device can include hardware and/or software that enables such communication infrastructure device to act as a programmable hardware controller. Accordingly, the communication infrastructure device can cause operation of actuators, drives, and the like to alter based upon control logic and the received data.

While the communication infrastructure device has been described as including programmable logic controller functionality, it is understood that any suitable industrial automation application can be executed by the communication infrastructure device. For instance, functionality associated with automation servers can be included within the communication infrastructure device. Furthermore, functionality associated with information servers and/or other higher-level systems can be included within the communication infrastructure device. Thus, entireties of industrial automation systems can be included within communication infrastructure devices.

To the accomplishment of the foregoing and related ends, certain illustrative aspects of the invention are described herein in connection with the following description and the annexed drawings. These aspects are indicative, however, of but a few of the various ways in which the principles of the invention can be employed and the subject invention is intended to include all such aspects and their equivalents. Other advantages and novel features of the invention will become apparent from the following detailed description of the invention when considered in conjunction with the drawings.

### BRIEF DESCRIPTION OF THE DRAWINGS

FIG. 1 illustrates a communication infrastructure apparatus that can execute an industrial automation application.

FIG. 2 is a communication infrastructure apparatus that can interrogate a data packet and execute an industrial automation application based upon such interrogation.

FIG. 3 is an industrial automation system that utilizes a communication infrastructure device to perform functionality associated with a programmable logic controller.

FIG. 4 is an industrial automation system that utilizes a communication infrastructure device to perform functionality associated with an automation server.

FIG. 5 is an industrial automation system that utilizes a communication infrastructure device to perform functionality associated with a programmable logic controller and an automation server.

FIG. 6 is an industrial automation system that utilizes a communication infrastructure device to perform functionality associated with an information server.

FIG. 7 is an industrial automation system that utilizes a communication infrastructure device to perform functionality associated with an information server, an automation server, and a programmable logic controller.

FIG. 8 is a communication infrastructure apparatus that can execute an industrial automation application.

FIG. 9 is a methodology for employing a communication infrastructure device to execute industrial automation applications.

FIG. 10 is a methodology for executing PLC functionality on a communication infrastructure device.

FIG. 11 is a methodology for performing security functionality at a communication infrastructure device.

FIG. 12 is an exemplary data packet.

### DETAILED DESCRIPTION

The claimed subject matter is now described with reference to the drawings, wherein like reference numerals are used to refer to like elements throughout. In the following description, for purposes of explanation, numerous specific details are set forth in order to provide a thorough understanding of the claimed subject matter. It may be evident, however, that such matter can be practiced without these specific details. In other instances, well-known structures and devices are shown in block diagram form in order to facilitate describing the invention.

As used in this application, the terms "component" and "system" and the like are intended to refer to a computer-related entity, either hardware, a combination of hardware and software, software, or software in execution. For example, a component may be, but is not limited to being, a process running on a processor, a processor, an object, an instance, an executable, a thread of execution, a program, and/or a computer. By way of illustration, both an application running on a computer and the computer can be a component. One or more components may reside within a process and/or thread of execution and a component may be localized on one computer and/or distributed between two or more computers.

Furthermore, the claimed subject matter may be implemented as a method, apparatus, or article of manufacture using standard programming and/or engineering techniques to produce software, firmware, hardware, or any combination thereof to control a computer to implement the disclosed subject matter. The term "article of manufacture" as used herein is intended to encompass a computer program accessible from any computer-readable device, carrier, or media. For example, computer readable media can include but are not limited to magnetic storage devices (*e.g.*, hard disk, floppy disk, magnetic strips...), optical disks (*e.g.*, compact disk (CD), digital versatile disk (DVD)...), smart cards, and flash memory devices (*e.g.*, card, stick, key drive...). Additionally it should be appreciated that a carrier wave can be employed to carry computer-readable electronic data such as those used in transmitting and receiving electronic mail or in accessing a network such as the Internet or a local area network (LAN). Of course, those skilled in the art will recognize many modifications may be made to this configuration without departing from the scope or spirit of the claimed subject matter. Moreover, the word "exemplary" is used herein to mean serving as an example, instance, or illustration. Any aspect or design described herein as "exemplary" is not necessarily to be construed as preferred or advantageous over other aspects or designs.

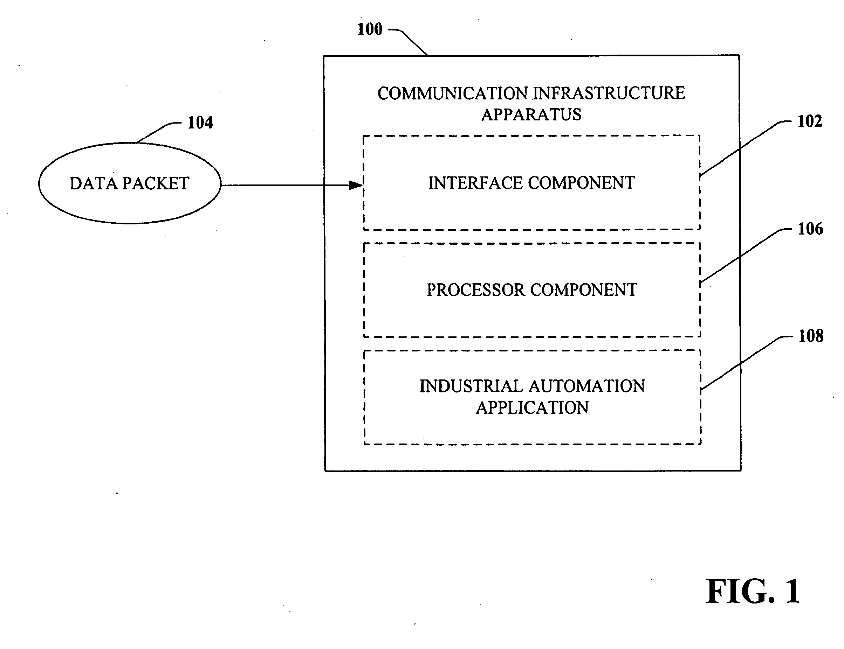

Turning now to the drawings, Fig. 1 illustrates a communication infrastructure apparatus 100 that can perform industrial automation functions. The infrastructure apparatus 100 can be, for example, a network switch, a router, a gateway, a proxy, or any other suitable networking device. Thus, for example, devices in an industrial automation system can be configured to deliver messages by way of Ethernet. Furthermore, the communication infrastructure apparatus 100 can, in one example, be physically coupled to industrial machinery - thus, the communication infrastructure apparatus 100 (and cables associated therewith) can be manufactured to withstand rigors of an industrial environment.

While the communication infrastructure apparatus 100 can include enhanced functionality, such apparatus 100 can also be utilized to undertake conventional tasks. For instance, if the communication infrastructure apparatus 100 is a network switch, such switch can be employed to connect network segments, which can be Ethernet, Token Ring, Fiber Channel, or any other suitable type of network segments. When a frame enters the communication infrastructure apparatus 100, such apparatus 100 can save an originating address and originating port in an address table, and thereafter selectively transmit the frame from specific ports based upon the frame's destination address and previous entries in the address table. For example, the address can be a MAC address, and the address table can include various MAC addresses. If the address is unknown, then the communication infrastructure apparatus 100 can output the frame to all connected interfaces (except the incoming port). If the address is known, the frame can be forwarded to a corresponding port in the address table, and if the destination port is identical to the originating port, the frame can be filtered (and prevented from being forwarded).

Similarly, if the communication infrastructure apparatus 100 is a router, such apparatus 100 can perform conventional routing functions. As is known, a router is a networking device that forwards data packets to an appropriate destination. In more detail, a router acts as a connecting bridge between two disparate networks and transfers data packets therebetween (in contrast to a switch, which connects devices to a local network). The communication infrastructure apparatus 100 can route data packets associated with Internet Protocol (IP) as well as any other suitable protocols, and can be an edge router, a core router, or any other suitable router. Furthermore, the communication infrastructure apparatus 100 can create and/or maintain a table that stores optimal routes to particular network destinations and "routing metrics" associated with such routes.

In another example, the communication infrastructure apparatus 100 can be a gateway, which is a network node for interfacing networks that utilize disparate protocols. The communication infrastructure apparatus 100 can include devices such as protocol translators, impedance matching devices, rate converters, fault isolators, or signal translators as necessary to provide system interoperability. In still another example, the communication infrastructure apparatus 100 can be a proxy, which is a computer network device and/or service that provides clients with an ability to indirectly connect to other network devices and/or services. For instance, a client can connect to the communication infrastructure apparatus 100, and request a connection, file, or other resource available on a server. The communication infrastructure apparatus 100 provides a resource, possibly connecting to the specified server, or by serving the client from a cache.

As can be discerned from the above, the communication infrastructure apparatus 100 can be employed to undertake conventional networking activities, such as switching, routing, protocol conversion, and the like. The communication infrastructure apparatus 100, however, can also be employed to effectuate industrial automation functions. In more detail, the communication infrastructure apparatus can include an interface component 102 that receives a data packet 104. The interface component 102 can be hardware, software, or a combination of hardware and software that facilitates receipt and/or delivery of data with respect to the communication infrastructure device 100. For example, the interface component 102 can include cabling and/or ports and/or adaptors that enable receipt of data delivered by way of a Common Industrial Protocol (CIP), DeviceNet, ControlNet, Hart, ProfiBus, Ethernet, EtherNet/IP, or any other suitable networking protocol. Furthermore, the interface component 102 can be utilized to one or more of sensors, actuators, digital I/O devices, and analog I/O devices. In other words, the communication infrastructure apparatus 100 can include direct network interfaces, thereby enabling low-level switches to be more integrated within an industrial automation system. The data packet 104 can include source information, destination information, protocol information, application identifiers, application data, and any other suitable data. Thus, the data packet 104 can be encoded for transmission over a particular link, and thus can include delimiters to distinguish the data packet 104 from dead air, address and control fields specific to a data link, as well as checksums to detect errors.

The interface component 102 can be communicatively coupled to a processor component 106 that can analyze the data packet 104 and undertake application-specific operations thereon. More specifically, in addition to providing functionality and services associated with conventional communication infrastructure devices, the communication infrastructure apparatus 100 can employ the processor 106 to execute an industrial automation application 108. For instance, the communication infrastructure apparatus 100 can include thereon (in memory or other electronic data storage) software and/or hardware required to execute the industrial automation application 108. In a particular example, the industrial automation application 108 can include functionality typically associated with a programmable logic controller (PLC). In other words, the communication infrastructure apparatus 100 can include a PLC. Therefore, the communication infrastructure apparatus 100 can be communicatively coupled to a plurality of industrial automation devices, such as actuators, sensors, drives, *etc.,* and perform control functionality upon the devices. Thus, the communication infrastructure apparatus can operate as a PLC and a switch, router, gateway, proxy, or the like. It is understood, however, that PLC functionality is just a portion of functionality that can be effectuated by the communication infrastructure apparatus 100. For instance, the communication infrastructure apparatus 100 can be associated with functionality typically associated with an automation server, an information server, or other information system that is associated with industrial automation.

To provide additional context for the communication infrastructure apparatus 100, several exemplary functionalities that can be undertaken by such apparatus 100 are provided below. It is to be understood that the claimed subject matter is intended to include such examples, and these examples are not meant to be limitative in any manner. The industrial automation application 108 can relate to a safety function. For instance, a workcell on a factory floor can include a safety mat and/or a pushbutton, wherein lack of weight on the safety mat and/or depression of the pushbutton can cause an industrial process to at least temporarily cease. In some instances, however, maintenance personnel may need to position themselves in close proximity to operating machinery to diagnose a problem - therefore, a safety function may need to be overridden. This type of functionality (as well as other safety-related functionality) can exist within the industrial automation application 108, which can be executed by the processor component 106. In one particular example, separate systems can exist for safety applications and/or can exist by way of modification and/or plug-ins to a protocol. Any suitable safety function, however, can be included within the industrial automation application 108.

In another example, the industrial automation application 108 can relate to time-based automation, and the processor component 106 can execute such time-based automation. Often, time-based systems relate to a distributed series of commands that must occur at specified times. Accordingly, a queue of commands can exist, wherein such commands are to be executed at particular times. These commands can be, for example, provided to the communication infrastructure apparatus 100 over IEEE 1588.

Providing the communication infrastructure apparatus 100 with an ability to execute the industrial automation application 108 enables various benefits, including elimination of ownership issues between information technology personnel and shop floor personnel for administration and maintenance of factory floor devices, as a single backplane will exist (e.g., a switch backplane, a router backplane, ...). Further, the processor 106 can transform messages delivered in an industrial network protocol (e.g., CIP) to XML-based messages, thereby enabling Web services and other features for legacy devices. This transformation enhances performance and reliability, enables centralization of security, and provides for more efficient management of an industrial automation system. Moreover, the communication infrastructure apparatus 100 can be attached to OEM equipment and shipped to a plant, which can then integrate the OEM equipment within a current industrial system. The communication infrastructure apparatus 100 can include plug-and-play functionality if attached to OEM equipment, for instance.

With more detail with respect to the data packet 104, such packet can be received and/or relayed by way of a protocol based upon IP protocols, which can include TCP, UDP, ICMP, and IGMP, Ethernet protocols, or any other suitable protocol. Furthermore, a communication of the data packet 104 to and/or from an industrial automation device can be based upon Web Services, message queues, exchange of XML data (which can be in a binary format or associated with a binary attachment), CIP. Moreover, communication of the data packet 104 can be in a wireless or wireline manner, such as by way of a protocol such as IEEE 802.11a/b/g, WiMax, ZigBee, Bluetooth, GSM, CDMA cellular, OFDMA, *etc.* In another aspect, the data packet 104 can be communicated over power lines, and the communication infrastructure device 100 can include software/hardware to reduce noise associated with such lines. In another specific example, the data packet 104 can include process/machine location and/or such information can be generated internally by the communication infrastructure apparatus 100. For instance, the industrial communication apparatus 100 can be utilized to determine a location, based upon cable length. In another example, the data packet 104 can include GPS information or other location information.
This location information can, for instance, be utilized in connection with a safety application (as described above) and/or a security function.

Now referring with more detail to the industrial automation application 108 that is executed by the processor component 106, such application 108 can be solely a software function, can relate to a programmable logic controller, an I/O concentrator, an HMI server, a motion controller, a batch engine, a DCS, a historian, a configuration archival system, an automation protocol proxy, an automation protocol firewall, or any suitable combination thereof, or can be associated with hardware attachments to the communication infrastructure apparatus 100 by way of hardware attachments (*e.g.*, through a modular expansion scheme). Furthermore, the industrial automation application 108 can be employed to interface to industrial networks, such as DeviceNet, ControlNet, EtherNet/IP, Foundation Fieldbus, HART, Profibus, Profinet, Remote I/O, DH-485, DH+, Modbus, and ASi. In still another example, the industrial automation application 108 can relate to security functions, such as verification of a device, a user, security features for industrial devices, or the like, as well as safety functions. In yet another example, the data packet 104 can include data that is associated with Business Process Execution Language (BPEL) (which is stored on the infrastructure communication device 100 or accessible to such device 100), and the industrial automation application 108 can be employed to process such data and deliver it to an appropriate industrial system and/or device. Furthermore, the industrial automation application can participate in a Manufacturing Execution System by way of standards-based messaging, wherein the standards include S95, S88, B2MML, and OAGIS.

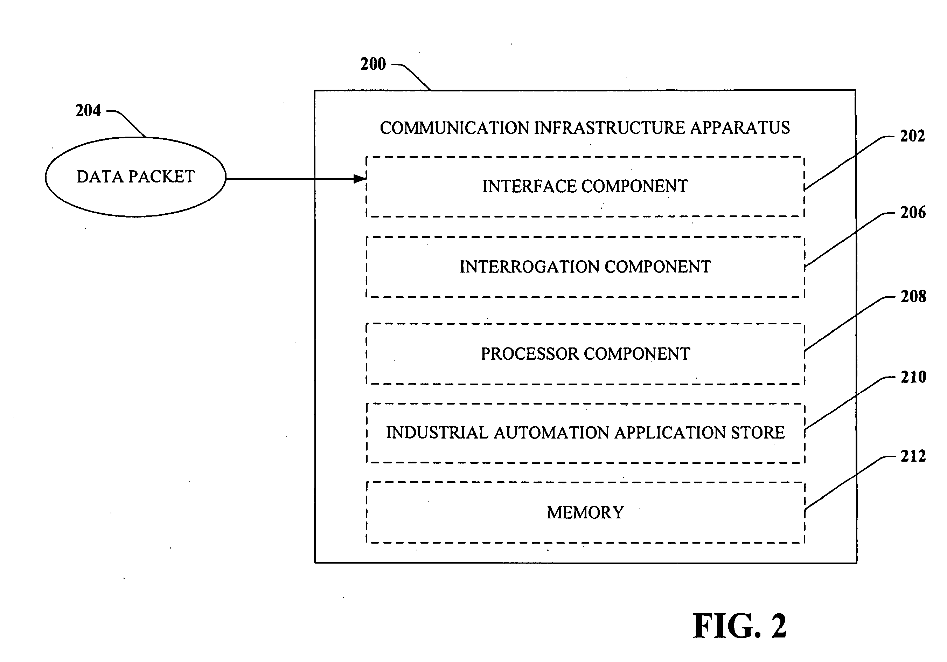

Now turning to Fig. 2, a communication infrastructure apparatus 200, such as a switch, a router, a gateway, a proxy, a firewall, a VPN, or a combination thereof, that can execute industrial automation applications is illustrated. The communication infrastructure apparatus includes an interface component 202 that receives a data packet 204. The data packet can be delivered to the communication infrastructure apparatus 200 over any suitable protocol that can be utilized in connection with transmission of industrial automation data. The interface component 202 can include any suitable hardware and/or software to enable receipt of the data packet 204 at the communication infrastructure apparatus 200. The interface component 202 is communicatively coupled to an interrogation component 206 that reviews content of the data packet 204 and determines a type of application that is to be executed based upon the content. For instance, the data packet 204 can include a header that indicates a source of the data, a portion that indicates a type of application desirably executed, a portion that indicates a destination for results of the application, metadata associated with the data packet 204, and the like.

Results of the review of the data packet 204 undertaken by the interrogation component 206 can be delivered to a processor component 208, which can select an industrial automation application from an industrial automation application store 210. In other words, the communication infrastructure apparatus 200 can execute a plurality of industrial automation applications depending upon content of the data packet 204. Furthermore, the data packet 204, preceding data packets, and/or subsequent data packets can relate to a process that utilizes various disparate industrial automation applications (such as a business process). The communication infrastructure device 200, through utilization of the interrogation component 206, the processor 208, and at least two applications within the industrial automation application store, can effectuate execution of the business process. Furthermore, given a particular sequence of data packets, certain industrial automation applications can be invoked and executed. For instance, the communication infrastructure apparatus 200 can include memory 212 that stores disparate sequences of data packets that invoke particular industrial automation applications (and/or sequences of industrial automation applications).

In still another example, the communication infrastructure apparatus 200 can include multiple processor components, thereby enabling parallel processing of a single application and/or simultaneous invocation and execution of disparate industrial automation applications. For instance, the communication infrastructure apparatus 200 can include multiple inputs and outputs, and can simultaneously receive numerous data packets. Due to expediency often required in industrial automation, various industrial automation tasks may need to occur simultaneously in order to meet automation system requirements. In still yet another example, at least one industrial automation application within the industrial automation application store 210 can utilize semantic methods, which enables conversion of information between formats. In a specific example, semantic methods can be utilized to convert data in a legacy format to a format that is utilized by a more modem system. Furthermore, semantic methods can be employed to facilitate plug-and-play functionality with the communication infrastructure apparatus 200.

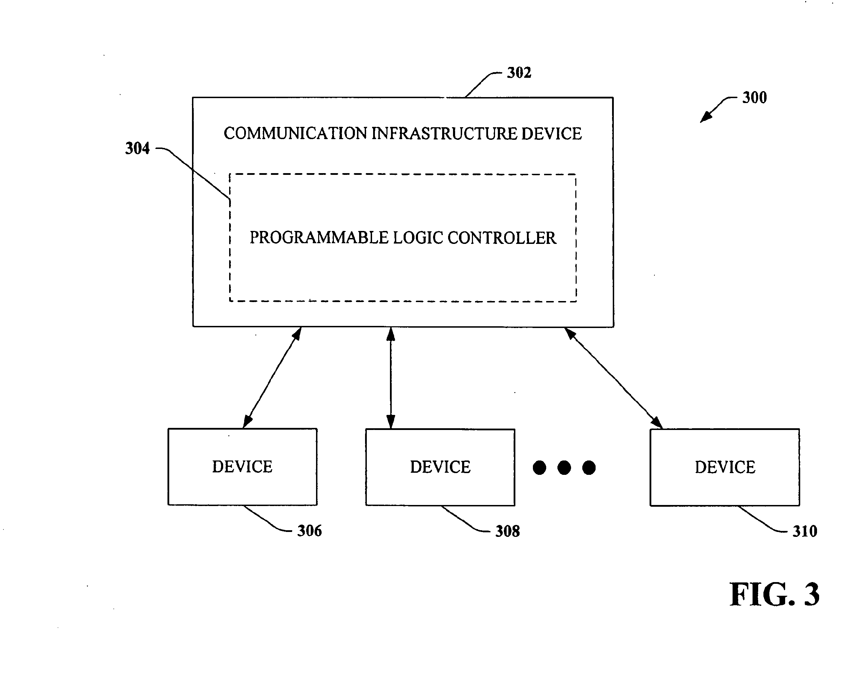

Now referring to Fig. 3, an exemplary industrial automation system 300 is illustrated. The system 300 includes a switch, router, gateway, proxy, or other suitable communication infrastructure device 302. The communication infrastructure device 302 includes a programmable logic controller 304. In other words, the communication infrastructure device 302 includes sufficient hardware and/or software to enable the communication infrastructure device to perform both as a PLC and as a switch, router, proxy, or other suitable communication infrastructure device. The communication infrastructure device 302 is communicatively coupled to a plurality of factory-floor industrial devices 306-310, including sensors, actuators such as drives, and the like. The communication infrastructure device 302 can receive and deliver communications to/from the industrial devices 306-310 in any suitable manner. For instance, the devices 306-310 can include ports that enable communications to transpire between the communication infrastructure device 302 and the devices 306-310 by way of Ethernet. The devices 306-310 can then be wired to the communication infrastructure by way of such ports. In another example, communications can occur wirelessly over an Ethernet protocol (the application layer can be an industrial automation protocol such as CIP).

In an exemplary operation of the system 300, the device 306 can be a sensor that delivers sensor data to the communication infrastructure device 302. The communication infrastructure device 302 determines a source of data (the device 306), and a desired destination for the data (e.g., the programmable logic controller 304). The programmable logic controller 304 can then review the data (knowing the source of the data) and provide instructions to a disparate device based upon such received data. For instance, the data from the device 306 can indicate that more liquid should be extracted from a pump, and the programmable logic controller 304 can cause the device 308 (which can be a pump) to provide additional liquid. Again, as the communication infrastructure device 302 can execute industrial automation applications, such communication infrastructure device 302 can act as both a switch, router, *etc.* and a PLC.

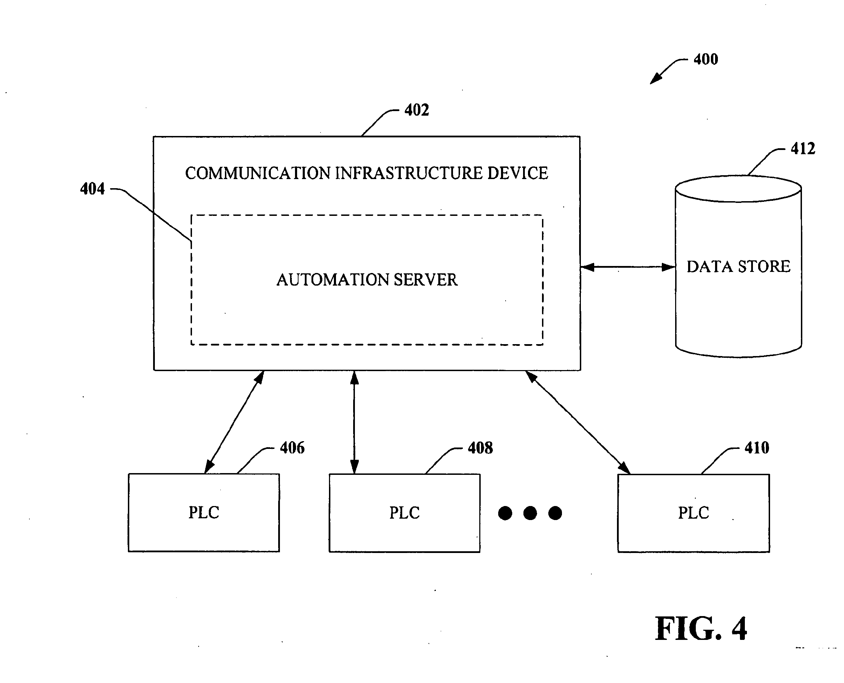

Turning now to Fig. 4, an exemplary industrial automation system 400 is illustrated. The system 400 includes a communication infrastructure device 402, which can be a switch, a router, a gateway, a proxy, a VPN, a firewall, or any suitable combination thereof. The communication infrastructure device 402 includes software and/or hardware that enables such infrastructure device 402 to act as an automation server 404. Conventionally, automation servers are computers that gather data from PLCs and deliver such data to upper-level systems, such as ERP systems, MES programs (which can undertake analysis on the data, display the data *via* a Human Machine Interface, ...). One example of an automation server is an OPC server (OLE for process control). Furthermore, the automation server 404 can deliver data to a plurality of PLCs 406-410 (e.g., supervisory control data). Other functionality associated with automation servers is caching of data to ensure that a control system is not overwhelmed with data. As communication infrastructure devices typically are not associated with substantial data storage space, an external data store 412 can be provided. The communication infrastructure device 402 can populate the data store 412 and retrieve data from such data store 412 by way of a high-speed bus.

Conventional automation servers also typically include automation-specific middleware applications (such as OPC), which is software that facilitates connection of the PLCs 406-410 into higher-level systems. In the system 400, however, such middleware may not be required, as PLCs, automation servers, and higher-level systems can all reside on a substantially similar platform (*e.g.*, on a communication infrastructure device or a plurality of communication infrastructure devices). The communication infrastructure device 502 can, however, execute other functionality associated with conventional automation servers. For instance, it can analyze data - more particularly, the communication infrastructure device 502 can review time series data for variations in timing that indicate equipment failure, or any other suitable data analysis, such as relating temperatures to other process measurements to quality information.

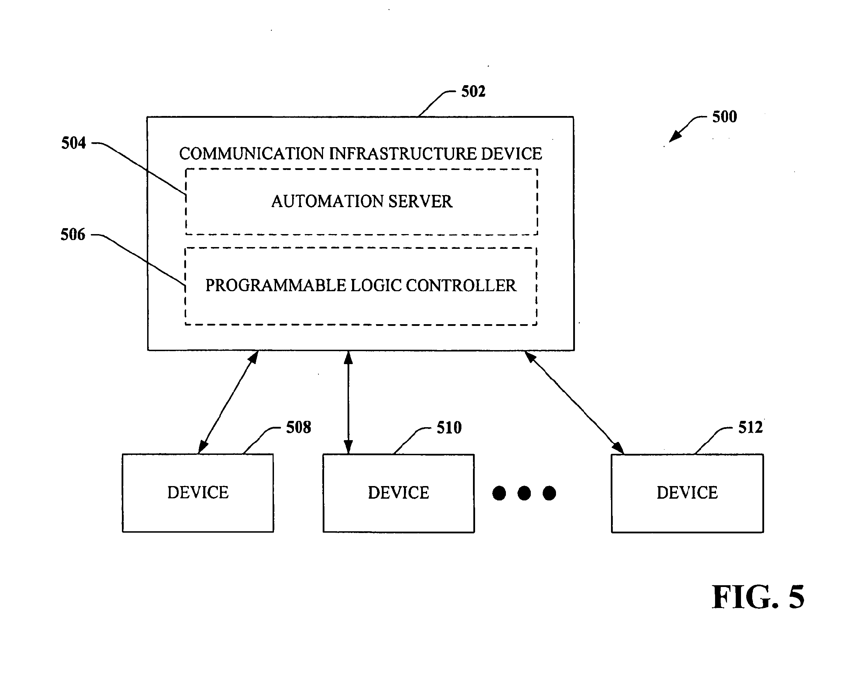

Turning now to Fig. 5, a system 500 that facilitates industrial automation is illustrated. The system 500 includes a communication infrastructure device 502, such as a switch, a router, a gateway, *etc.* The communication infrastructure device 502 can further include hardware and/or software that enables the communication infrastructure device 502 to act conventionally, as well as act as one or more automation servers 504 and one or more PLCs 506. Placing the automation server(s) 504 and the programmable logic controller(s) 506 on a same platform facilitates enhanced security, as only the communication infrastructure device 502 need be secured (*e.g.,* security is centralized). The communication infrastructure device 502 can be communicatively coupled to a plurality of industrial devices 508-512, such as sensors, actuators, drives, *etc.* In one example, the communication infrastructure device 502 can be physically mounted to machinery associated with at least one of the devices 508-512. Accordingly, the communication infrastructure device 502 can be industrially hardened to withstand rigors associated with a factory floor.

In operation, the communication infrastructure device 502 can be communicatively coupled to one or more information servers or other higher-level systems (not shown). These information servers or other higher-level systems can be utilized to control orders that relate to manufacturing. Furthermore, information servers can be associated with the Internet, as well as supply chain and management resources. The communication infrastructure device 502 can include hardware/software that facilitates mapping data between the information servers and the automation server 504 within the communication infrastructure device 502. The automation server 504 can perform duties conventionally associated with automation servers, such as communicate with the programmable logic controller 506. The programmable logic controller 506 in turn can communicate with the devices 508-512. Furthermore, legacy devices are not problematic within the system 500, as most legacy devices are associated with Ethernet adaptors. Thus, the communication infrastructure device 502 can be quickly and easily interconnected with legacy devices.

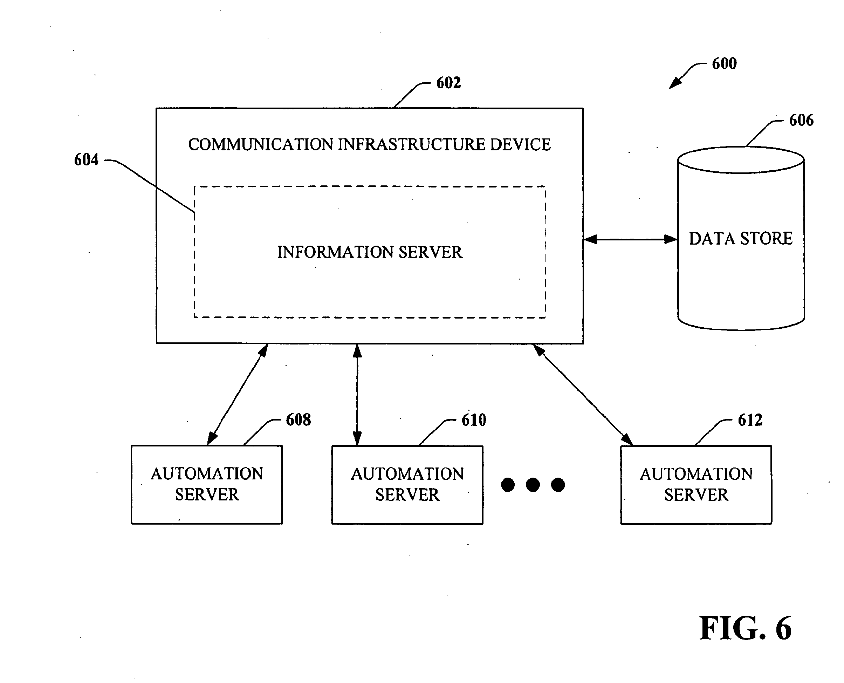

Now turning to Fig. 6, an exemplary industrial automation system 600 is illustrated. The system 600 includes a communication infrastructure device 602 (e.g., a switch, a router, a gateway, a proxy, a VPN, a firewall, ...) that can further include hardware/software associated with an information server 604. As described above, information servers can be utilized for controlling orders that get routed to a manufacturing level. They can also be associated with Enterprise Resource Planning systems, can be associated with the Internet, supply chains, management, and the like. Typically, the information servers are employed as interfaces to the factory, and include logic that enables communications to occur over particular protocols. The information server 604, for instance, can enable integration with disparate applications (e.g., ERP applications) through middleware embodied in Service Oriented Architectures and Enterprise Service Buses. Furthermore, these information servers typically communicate by way of Ethernet or other common protocol. Thus, placing the information server 604 within the communication infrastructure device 602 consolidates hardware and software, centralizes security, and places the information server 604 and the communication infrastructure device 602 on a common backplane.

The system 600 further includes a data store 606 that can be accessed by the communication infrastructure device 602 to perform duties associated with the information server 604. The data store 606 can be existent on a disparate communication infrastructure device (not shown) or any other suitable piece of equipment on the network. The data store 606 can include backup data relating to the communication infrastructure device 602. Therefore, if such device is replaced on the network, downtime will be mitigated (as the replacement device will be quickly populated with data that enables it to act as the replaced device). Thus, if the communication infrastructure device 602 malfunctions, it can quickly and easily be replaced. The communication infrastructure device 602 can also be communicatively coupled to one or more automation servers 608-612, which can be conventional automation servers and/or automation servers embedded within disparate communication infrastructure devices. In another example, the one or more automation servers 608-612 can be embedded within a PLC. It can thus be discerned that any suitable arrangement of automation servers are contemplated by the inventors, and all such arrangements are intended to fall under the scope of the hereto-appended claims.

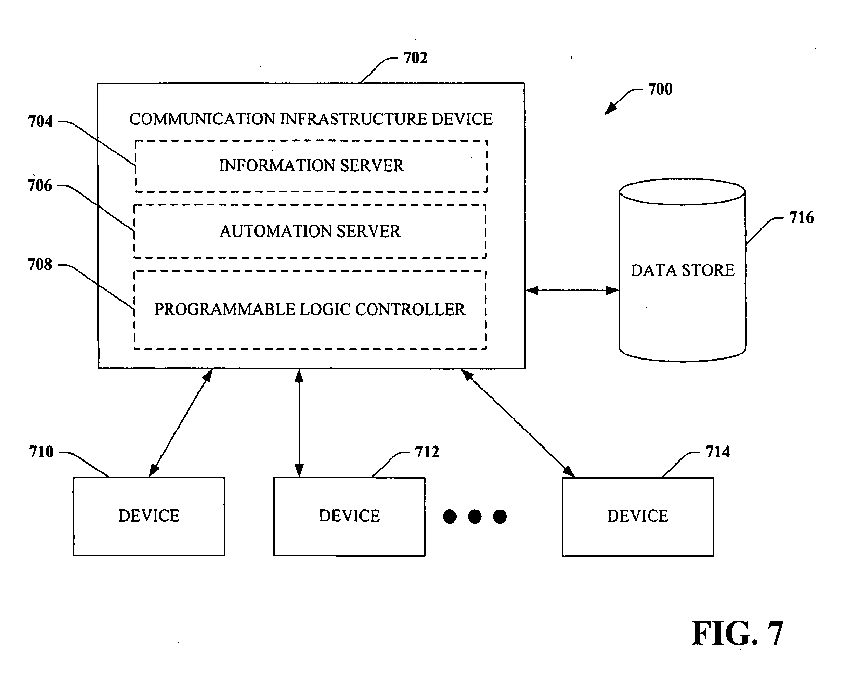

Referring now to Fig. 7, an industrial automation system 700 is illustrated. The system 700 includes a communication infrastructure device 702, which can be a router, a switch, a gateway, a proxy, or any other suitable communication infrastructure device. The communication infrastructure device 702 includes hardware and/or software that is associated with an information server 704, an automation server 706, and a programmable logic controller 708. Furthermore, the communication infrastructure device 702 can include a plurality of information servers, a plurality of automation servers, and/or a plurality of programmable logic controllers. A number of such devices will depend upon system design. Accordingly, protocol transforms will be reduced, as functionality associated with information servers, automation servers, and programmable logic controllers can be hosted on the communication infrastructure device 702. The communication infrastructure device 702 can further communicate with a plurality of factory devices 710-714, such as sensors and actuators. These devices 710-714 often are associated with Ethernet ports - thus, standard Ethernet cables can be utilized to effectuate data transfer between the devices 710-714 and the communication infrastructure device 702. The communication infrastructure device 702 can also access an external data store 716 for any data storage needs.

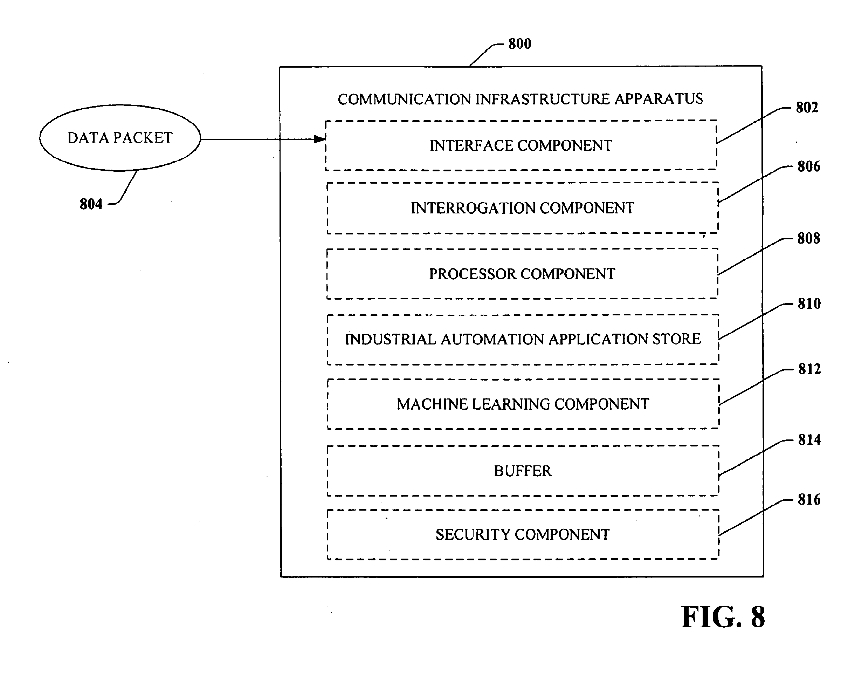

Now turning to Fig. 8, an exemplary communication infrastructure apparatus 800 that can be employed within the systems described above is illustrated. The communication infrastructure apparatus 800 can be a switch, a router, a gateway, a proxy, a VPN, a firewall, or any suitable combination thereof. The communication infrastructure apparatus 800 includes one or more interface components 802 that facilitate receipt and/or delivery of one or more data packets 804, wherein the data packet 804 can include indicia relating to an industrial automation application that is to be executed. For instance, the data packet 804 can include explicit data relating to a type of industrial automation application to be executed. In another example, a type of automation application to execute can be determined by analyzing source of the data packet 804. The communication infrastructure apparatus 800 further includes an interrogation component 806 that can review the data packet 804 and analyze particular content therein. As alluded to above, the data packet 804 can include source identifying data, application identifying data, and the like, and the interrogation component 806 can analyze such data.

The interrogation component 806 can then inform a processor component 808 that an industrial automation application is desirably executed based at least in part upon contents of the data packet 804. The processor component 808 then can access an industrial automation application store 810 to retrieve and execute a desirable application. The application can, for example, relate to a programmable logic controller and/or functions conventionally associated therewith. The communication infrastructure apparatus 800 can further include a machine-learning component 812 that can aid the interrogation component 806 in determining an industrial automation application that is desirably executed upon the communication infrastructure device 800. For instance, given previous use and/or current context, the machine-learning component 812 can generate inferences relating to an application to execute.

As used herein, the term "inference" refers generally to the process of reasoning about or inferring states of the system, environment, and/or user from a set of observations as captured *via* events and/or data. Inference can be employed to identify a specific context or action, or can generate a probability distribution over states, for example. The inference can be probabilistic - that is, the computation of a probability distribution over states of interest based on a consideration of data and events. Inference can also refer to techniques employed for composing higher-level events from a set of events and/or data. Such inference results in the construction of new events or actions from a set of observed events and/or stored event data, whether or not the events are correlated in close temporal proximity, and whether the events and data come from one or several event and data sources. Various classification schemes and/or systems (e.g., support vector machines, neural networks, expert systems, Bayesian belief networks, fuzzy logic, data fusion engines...) can be employed in connection with performing automatic and/or inferred action. Thus, in one example, the data packet 804 can be subject to noise which renders at least a portion of the data therein unreliable. Based at least in part upon previous received data and/or previous applications executed, the machine-learning component 812 can infer an application (or series of applications) which should be executed.

The communication infrastructure apparatus 800 can further include a buffer 814 that can be utilized to buffer data as it is received by the communication infrastructure apparatus 800. For example, industrial automation environments can include a substantial amount of data - more than which can be processed at a particular point in time. Thus, the buffer 814 can be utilized to create data queues and organize data according to priority. Buffered data can be contemplated by the processor component 808 based upon location of data within the queues. The communication infrastructure apparatus can also include a security component 816 that can undertake security measures based upon content of the data packet 804. For instance, the data packet 804 can include data relating to source of data, and appropriate security measures can be undertaken by way of the security component 816 based upon such source. In another example, the data packet 804 can be associated with metadata, which can indicate time of creation of the data packet 804, operator associated with the data packet 804, and any other suitable metadata. The security component 816 can then undertake security measures based at least in part upon such metadata.

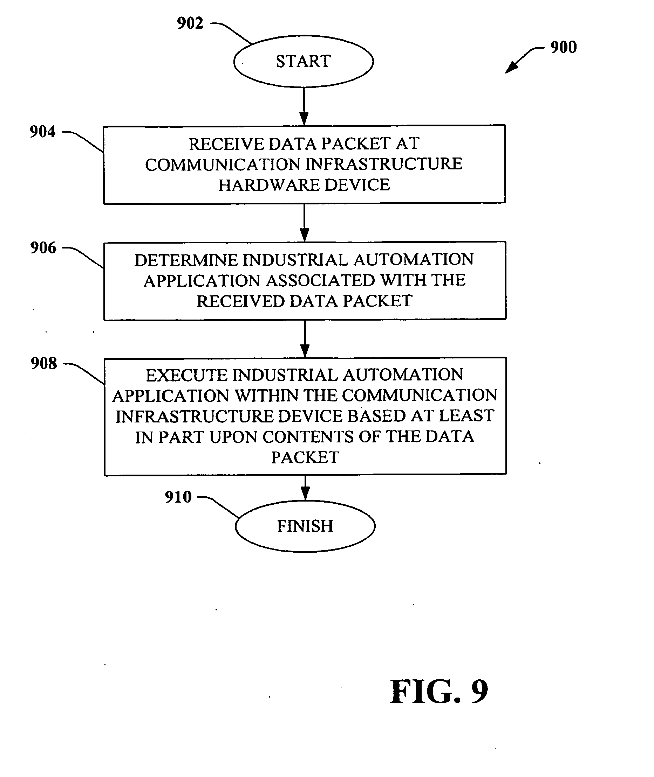

Referring to Figs. 9-11, methodologies in accordance with various aspects of the claimed subject matter are illustrated. While, for purposes of simplicity of explanation, the methodologies are shown and described as a series of acts, it is to be understood and appreciated that the claimed subject matter is not limited by the order of acts, as some acts may occur in different orders and/or concurrently with other acts from that shown and described herein. For example, those skilled in the art will understand and appreciate that a methodology could alternatively be represented as a series of interrelated states or events, such as in a state diagram. Moreover, not all illustrated acts may be required to implement a methodology in accordance with the claimed subject matter. Additionally, it should be further appreciated that the methodologies disclosed hereinafter and throughout this specification are capable of being stored on an article of manufacture to facilitate transporting and transferring such methodologies to computers. The term article of manufacture, as used herein, is intended to encompass a computer program accessible from any computer-readable device, carrier, or media.

Turning specifically to Fig. 9, a methodology 900 for utilizing a communication infrastructure device to execute an industrial automation application is illustrated. The methodology starts at 902, and at 904 a data packet is received at a communication infrastructure hardware device. As elucidated herein, the communication infrastructure device can be a switch, a router, a proxy, a gateway, and/or a combination thereof. The data packet can include data that indicates source as well as an application associated with the data packet. At 906, a determination is made regarding an application that is associated with the received data packet. For instance, if the data packet is delivered from a sensor, then it can be determined that functionality associated with a programmable logic controller is desirably executed. Any suitable industrial automation application, however, can be utilized in connection with the methodology 900. At 908, an industrial automation application is executed within the communication infrastructure device based at least in part upon contents of the received data packet. Execution of industrial automation applications within information technology (IT) devices (communication infrastructure devices) simplifies industrial automation systems in terms of required hardware, cabling, as well as security (which can be centralized). In more detail, communication infrastructure devices already include a security system associated therewith; thus, if the automation application is embedded within the communication infrastructure device, it can utilize a same security system.

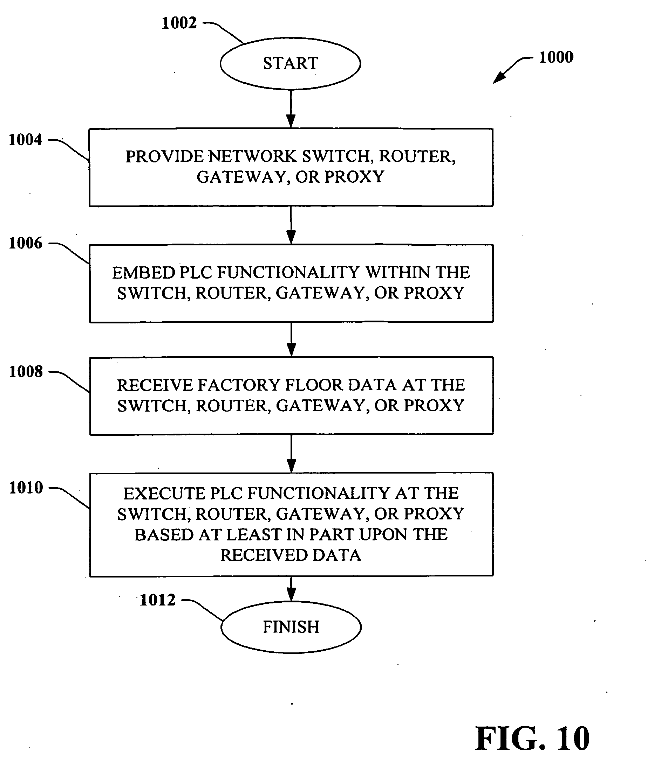

Now turning to Fig. 10, a methodology 1000 for employing PLC functionality at a communication infrastructure device is illustrated. The methodology 1000 begins at 1002, and at 1004 a network switch, a router, a gateway, or a proxy is provided. At 1006, PLC functionality is embedded within the provided network switch, router, gateway, or proxy. For instance, control logic, an operating system associated with PLCs, and the like can be placed within the switch, router, gateway, or proxy. At 1008, factory floor data is received at the communication infrastructure device. For instance, this factory floor data can be received from one or more sensors. At 1010, PLC functionality is executed at the switch, router, gateway, or proxy based at least in part upon the received data. For instance, the communication infrastructure device can execute the appropriate control logics upon such device, and thereafter relay output to one or more appropriate drives/actuators. The methodology 1000 completes at 1012.

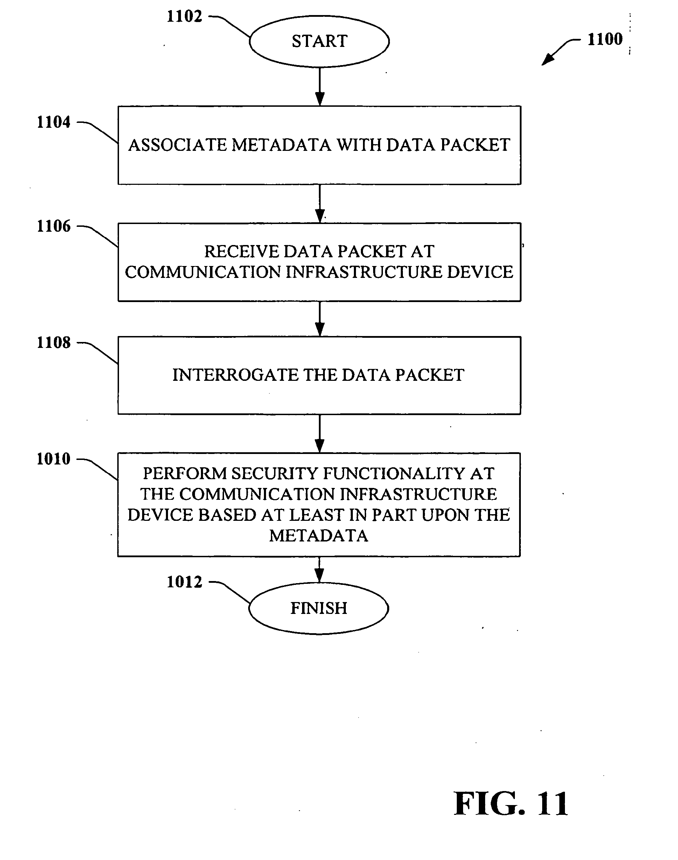

Referring now to Fig. 11, a methodology 1100 for providing security based at least in part upon metadata associated with a data packet is illustrated. The methodology 1100 begins at 1102, and at 1104 metadata is associated with a data packet. For instance, a time of data packet creation, an operator associated with creation of the data packet, machine identity, and any other suitable metadata can be associated with the data packet. At 1106, the data packet is received at a communication infrastructure device, and at 1108 the data packet is interrogated. For instance, contents of the data packet can be analyzed to determine a desirable industrial automation application to execute. At 1110, security functionality is performed at the communication infrastructure device based at least in part upon the metadata. For example, data relating to a particular machine can be subject to verification and/or validation by an operator, and such verification/validation can be enforced based upon the metadata. At 1112, the methodology 1000 completes.

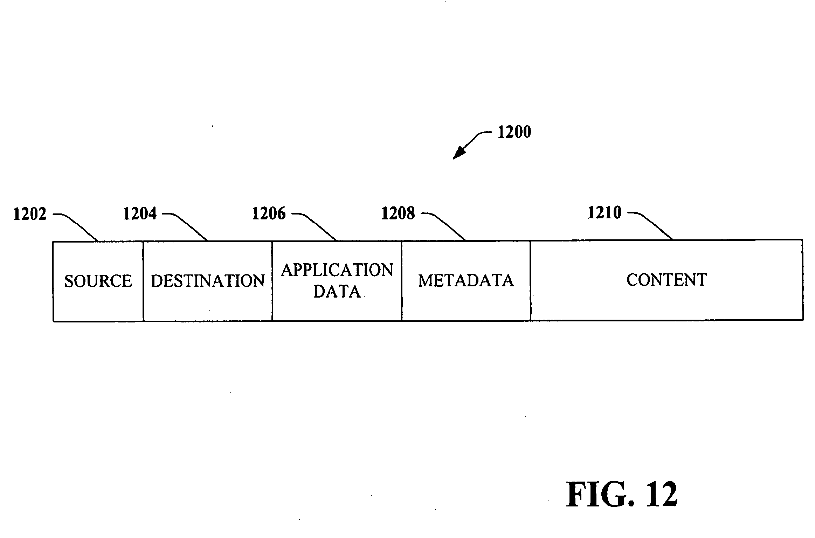

Now referring to Fig. 12, an exemplary data packet 1200 that can be utilized in connection with one or more aspects described herein is illustrated. The data packet 1200 can include a first portion 1202 that includes data indicative of a source. For instance, the source 1202 can be a machine, a sensor, a programmable logic controller, or any other suitable source. The data packet 1200 can further include a second portion 1204 that may include a destination for the data packet 1200. In one example, the data packet 1200 may be desirably routed from one application/process/device to a disparate application/process/device. Given such data, a communication infrastructure device can act in a conventional manner. The data packet 1200 can also include a third portion 1206 that comprises data indicating an industrial automation application that is desirably executed at a communication infrastructure device. For example, the third portion 1206 can include data indicating that control logics should be updated and/or undertaken based at least in part upon content of the data packet 1200. The data packet 1200 can include a fourth portion 1208 for inclusion of metadata, such as location of creation of the data packet 1200, time of creation of the data packet 1200, or any other suitable metadata. Finally, the data packet 1200 can include content, which can be forwarded, manipulated, and the like.

What has been described above includes examples of the invention. It is, of course, not possible to describe every conceivable combination of components or methodologies for purposes of describing the subject invention, but one of ordinary skill in the art may recognize that many further combinations and permutations of the invention are possible. Accordingly, the invention is intended to embrace all such alterations, modifications and variations that fall within the spirit and scope of the appended claims. Furthermore, to the extent that the term "includes" is used in either the detailed description or the claims, such term is intended to be inclusive in a manner similar to the term "comprising" as "comprising" is interpreted when employed as a transitional word in a claim.
According to aspects of the invention a communication infrastructure apparatus comprises an interface component that receives a data packet at the communication infrastructure apparatus. A processor component communicatively coupled to the interface component executes an industrial automation application based at least in part upon contents of the data packet. For example, the communication infrastructure apparatus can be a switch, a router, a gateway, and/or a proxy.

## Claims

1. A communication infrastructure apparatus (200; 800), comprising:
an industrial automation application store (210; 810) that stores at least two industrial automation applications;
an interface component (202; 802) that receives a data packet (204; 804) at the communication infrastructure apparatus;
an interrogation component (206; 806) communicatively coupled to the interface component (202; 802) that reviews content of the data packet (204; 804) and determines a type of application that is to be executed based upon the content; and
a processor component (208; 808) communicatively coupled to the interface component (202; 802) that executes an industrial automation application based at least in part upon contents of the data packet, wherein results of the review of the data packet (204; 804) undertaken by the interrogation component (206; 806) are delivered to the processor component (208; 808) that accordingly selects the industrial automation application from the at least two industrial automation applications stored in the industrial automation application store (210; 810).

2. The communication infrastructure apparatus (200; 800) of claim 1 being one of a switch, a router, a gateway, and a proxy.

3. The communication infrastructure apparatus (200; 800) of claim 1 being one of firewall, a virtual private network, and a combination thereof.

4. The communication infrastructure apparatus (200; 800) of claim 1, 2 or 3 the automation application is at least one of a programmable logic controller, an input/output concentrator, a human machine interface server, a motion controller, a batch engine, a distributed control system, a historian application, a configuration archival system, an automation protocol proxy, and an automation protocol firewall.

5. The communication infrastructure apparatus (200; 800) of one of claims 1 to 4, the processor (208; 808) receives and executes security functions relating to an industrial device connected to a network by way of the communication infrastructure apparatus.

6. The communication infrastructure apparatus (200; 800) of one of claims 1 to 5, the industrial automation application executes business process execution language.

7. A method (1000) for employing a communication infrastructure device (200; 800) in an industrial automation environment, comprising:
storing at least two industrial automation applications at the communication infrastructure device (200; 800);
receiving (904) a data packet (204, 804) at the communication infrastructure device (200; 800);
determining (906) an industrial automation application associated with the received data packet from the stored at least two industrial automation applications; and
executing (908) the industrial automation application within the communication infrastructure device (200; 800) based at least in part upon content of the data packet.

8. The method of claim 7, further comprising receiving the data packet (204; 804) over an Ethernet protocol.

9. The method of claim 7 or 8, the communication infrastructure device (200; 800) is one of a network switch, a router, a proxy, a gateway, a virtual private network, and a firewall.

10. An industrial automation system (300), comprising:
a communication infrastructure device (302; 200; 800) according to one of claims 1 to 5 comprising at least one of hardware and software associated with a programmable logic controller (304); and
at least one factory floor device (306) communicatively coupled to the communication infrastructure device.

## Patentansprüche

1. Kommunikationsinfrastruktur-Vorrichtung (200; 800), die umfasst:
einen Speicher (210; 810) für industrielle Automatisierungsanwendungen, der wenigstens zwei industrielle Automatisierungsanwendungen speichert;
eine Schnittstellenkomponente (202; 802), die ein Datenpaket (204; 804) bei der Kommunikationsinfrastruktur-Vorrichtung empfängt;
eine Abfragekomponente (206; 806), die mit der Schnittstellenkomponente (202; 802) kommunikationstechnisch gekoppelt ist und den Inhalt des Datenpakets (204; 804) überprüft und anhand des Inhalts einen Anwendungstyp bestimmt, der auszuführen ist; und
eine Prozessorkomponente (208; 808), die mit der Schnittstellenkomponente (202; 802) kommunikationstechnisch gekoppelt ist und wenigstens teilweise anhand von Inhalten des Datenpakets eine industrielle Automatisierungsanwendung ausführt, wobei Ergebnisse der Prüfung des Datenpakets (204; 804), die durch die Abfragekomponente (206; 806) vorgenommen wird, zu der Prozessorkomponente (208; 808) geliefert werden, die die industrielle Automatisierungsanwendung aus den wenigstens zwei industriellen Automatisierungsanwendungen, die in dem Speicher (210; 810) für industrielle Automatisierungsanwendungen gespeichert sind, entsprechend auswählt.

2. Kommunikationsinfrastruktur-Vorrichtung (200; 800) nach Anspruch 1, die ein Switch, ein Router, ein Gateway oder ein Proxy ist.

3. Kommunikationsinfrastruktur-Vorrichtung (200; 800) nach Anspruch 1, die eine Firewall, ein virtuelles privates Netz oder eine Kombination hiervon ist.

4. Kommunikationsinfrastruktur-Vorrichtung (200; 800) nach Anspruch 1, 2 oder 3, wobei die Automatisierungsanwendung eine programmierbare Logiksteuereinheit und/oder eine Eingangs/Ausgangs-Konzentrationseinrichtung und/oder ein Mensch/Maschinen-Schnittstellen-Server und/oder eine Bewegungssteuereinheit und/oder eine Stapel-Engine und/oder ein verteiltes Steuersystem und/oder eine Historienanwendung und/oder ein Konfigurationsarchivierungssystem und/oder ein Automatisierungsprotokoll-Proxy und/oder eine Automatisierungsprotokoll-Firewall ist.

5. Kommunikationsinfrastruktur-Vorrichtung (200; 800) nach einem der Ansprüche 1 bis 4, wobei der Prozessor (208; 808) Sicherheitsfunktionen, die mit einer industriellen Vorrichtung in Beziehung stehen, die mit einem Netz mittels der Kommunikationsinfrastruktur-Vorrichtung verbunden ist, empfängt und ausführt.

6. Kommunikationsinfrastruktur-Vorrichtung (200; 800) nach einem der Ansprüche 1 bis 5, wobei die industrielle Automatisierungsanwendung eine Geschäftsprozess-Ausführungssprache ausführt.

7. Verfahren (1000) für die Verwendung einer Kommunikationsinfrastruktur-Vorrichtung (200; 800) in einer industriellen Automatisierungsumgebung, das umfasst:
Speichern von wenigstens zwei industriellen Automatisierungsanwendungen in der Kommunikationsinfrastruktur-Vorrichtung (200; 800);
Empfangen (904) eines Datenpakets (204, 804) bei der Kommunikationsinfrastruktur-Vorrichtung (200; 800);
Bestimmen (906) einer industriellen Automatisierungsanwendung, die dem empfangenen Datenpaket zugeordnet ist, aus den gespeicherten wenigstens zwei industriellen Automatisierungsanwendungen; und
Ausführen (908) der industriellen Automatisierungsanwendung in der Kommunikationsinfrastruktur-Vorrichtung (200; 800) wenigstens teilweise anhand von Inhalt des Datenpakets.

8. Verfahren nach Anspruch 7, das ferner das Empfangen des Datenpakets (204; 804) über ein Ethernet-Protokoll umfasst.

9. Verfahren nach Anspruch 7 oder 8, wobei die Kommunikationsinfrastruktur-Vorrichtung (200; 800) ein Netz-Switch, ein Router, ein Proxy, ein Gateway, ein virtuelles privates Netz oder eine Firewall ist.

10. Industrielles Automatisierungssystem (300), das umfasst:
eine Kommunikationsinfrastruktur-Vorrichtung (302; 200; 800) nach einem der Ansprüche 1 bis 5, die Hardware und/oder Software enthält, die einer programmierbaren Logiksteuereinheit (304) zugeordnet ist; und
wenigstens eine Fabrikhallen-Vorrichtung (306), die mit der Kommunikationsinfrastruktur-Vorrichtung kommunikationstechnisch gekoppelt ist.

## Revendications

1. Appareil d'infrastructure de communication (200 ; 800), comprenant :
une mémoire d'applications d'automatisation industrielle (210 ; 810) qui mémorise au moins deux applications d'automatisation industrielle,
un composant formant interface (202 ; 802) qui reçoit un paquet de données (204 ; 804) au niveau de l'appareil d'infrastructure de communication,
un composant d'interrogation (206 ; 806) couplé par communication au composant formant interface (202 ; 802) qui examine le contenu du paquet de données (204 ; 804) et détermine un type d'application qui doit être exécuté sur la base du contenu, et
un processeur (208 ; 808) couplé par communication au composant formant interface (202 ; 802) qui exécute une application d'automatisation industrielle fondée au moins en partie sur le contenu du paquet de données, dans lequel les résultats de l'examen du paquet de données (204 ; 804), pris en charge par le composant d'interrogation (206 ; 806), sont fournis au processeur (208 ; 808) qui sélectionne en conséquence l'application d'automatisation industrielle à partir des au moins deux applications d'automatisation industrielle stockées dans la mémoire d'applications d'automatisation industrielle (210 ; 810).

2. Appareil d'infrastructure de communication (200 ; 800) selon la revendication 1, étant l'un d'un commutateur, d'un routeur, d'une passerelle et d'un serveur mandataire.

3. Appareil d'infrastructure de communication (200 ; 800) selon la revendication 1, étant l'un d'un pare-feu, d'un réseau virtuel privé et d'une combinaison de ceux-ci.

4. Appareil d'infrastructure de communication (200 ; 800) selon la revendication 1, 2 ou 3, dans lequel l'application d'automatisation est au moins l'un d'un contrôleur logique programmable, d'un concentrateur d'entrée / sortie, d'un serveur d'interface homme machine, d'un contrôleur de mouvement, d'un moteur de traitement par lots, d'un système de commande réparti, d'une application d'histoire, d'un système d'archives de configurations d'un serveur mandataire au protocole d'automatisation et d'un pare-feu au protocole d'automatisation.

5. Appareil d'infrastructure de communication (200 ; 800) selon l'une des revendications 1 à 4, dans lequel le processeur (208 ; 808) reçoit et exécute des fonctions de sécurité se rapportant à un dispositif industriel relié à un réseau au moyen de l'appareil d'infrastructure de communication.

6. Appareil d'infrastructure de communication (200 ; 800) selon l'une des revendications 1 à 5, dans lequel l'application d'automatisation industrielle exécute un langage d'exécution de processus professionnel.

7. Procédé (1000) permettant d'utiliser un dispositif d'infrastructure de communication (200 ; 800) dans un environnement d'automatisation industrielle, comprenant :
la mémorisation d'au moins deux applications d'automatisation industrielle au niveau du dispositif d'infrastructure de communication (200 ; 800),
la réception (904) d'un paquet de données (204 ; 804) au niveau du dispositif d'infrastructure de communication (200 ; 800),
la détermination (906) d'une application d'automatisation industrielle associée au paquet de données reçu à partir des au moins deux applications d'automatisation industrielle mémorisées, et
l'exécution (908) de l'application d'automatisation industrielle dans le dispositif d'infrastructure de communication (200 ; 800) sur la base, au moins en partie, du contenu du paquet de données.

8. Procédé selon la revendication 7, comprenant en outre la réception du paquet de données (204 ; 804) sur un protocole Ethernet.

9. Procédé selon la revendication 7 ou 8, dans lequel le dispositif d'infrastructure de communication (200 ; 800) est l'un d'un commutateur de réseaux, d'un routeur, d'un serveur mandataire, d'une passerelle, d'un réseau virtuel privé et d'un pare-feu.

10. Système d'automatisation industrielle (300), comprenant :
un dispositif d'infrastructure de communication (302 ; 200 ; 800) conforme à l'une des revendications 1 à 5 comprenant au moins l'un d'un dispositif matériel et d'un logiciel associé à un contrôleur logique programmable (304), et
au moins un dispositif de terminal industriel (306) couplé par communication au dispositif d'infrastructure de communication.
